Europäisches Patentamt

(19) European Patent Office   (11) Numéro de publication: **0 160 153**

Office européen des brevets   **B1**

(12) **FASCICULE DE BREVET EUROPÉEN**

(45) Date de publication du fascicule du brevet:
29.03.89

(21) Numéro de dépôt: **84402189.9**

(22) Date de dépôt: **31.10.84**

(51) Int. Cl.⁴: **G 01 B 7/00,** G 01 B 11/00,
G 01 D 5/34

(54) Dispositif pour obtenir des coordonnées numériques d'un point ou d'un ensemble de points.

(30) Priorité: **10.11.83 FR 8317876**

(43) Date de publication de la demande:
**06.11.85 Bulletin 85/45**

(45) Mention de la délivrance du brevet:
**29.03.89 Bulletin 89/13**

(84) Etats contractants désignés:
**AT BE CH DE FR GB IT LI LU NL SE**

(73) Titulaire: **VCOM S.A., Ancienne Poste, CH- 2042
Valangin (CH)**

(72) Inventeur: **Jaluzot, Yves, Bois le Vicomte, F-76710
Montville (FR)**

(74) Mandataire: **Thibon- Littaye, Annick, Cabinet A.
THIBON- LITTAYE 11 rue de l'Etang, F-78160
Marly- le- Roi (FR)**

(56) Documents cité:
**EP-A-0 067 706
DE-A-2 245 178
FR-A-1 389 056
FR-A-2 362 364
FR-A-2 368 011
FR-A-2 410 251
US-A-3 665 608**

**Description**

La présente demande de brevet concerne le domaine du repérage et de l'enregistrement des coordonnées d'un point ou d'un ensemble de points.

Elle a pour objet un dispositif permettant de déterminer et d'enregistrer, avec une précision accrue, éventuellement en vue d'une reproduction ultérieure, des graphes, courbes, variations de déplacement en fonction du temps, et plus généralement toutes figures ayant une, deux ou même trois dimensions, de contrôler les signatures, d'enregistrer un savoir faire humain ou de mesurer des distances, ainsi que d'autres applications.

On a déjà proposé plusieurs solutions permettant d'entrer en ordinateur ou de saisir des coordonnées cartésiennes en temps réel en vue d'un affichage ou d'un traitement ultérieur. L'invention s'intéresse spécialement à ceux qui impliquent une mesure liée aux variations de longueur de fils tendus jusqu'à un stylet mobile utilisé comme traceur des points à relever.

Dans le brevet US-3 665 608 on a décrit un dispositif pour reperer la position d'un point comprenant un stylet inséré dans deux cylindres superposés autour desquels ont été fixés deux fils, l'autre extrémité desdits fils étant entourée autour de deux tambours de telle sorte que lorsqu'on déplace le stylet, l'un des deux tambours ou les deux tournent pour s'adapter au changement de longueur des fils. La position angulaire de chaque tambour est mesurée par des "transducteurs" d'angles, dont la sortie est couplée à un ordinateur afin d'obtenir la position du stylet. Il est donc procédé dans ce brevet par détermination de variations d'angles correspondant aux variations de longueur des fils.

Le brevet DE-2 245 178 a proposé un dispositif de transmission de mouvements arbitraires permettant de donner un signal représentatif du mouvement tri-dimensionnel d'un point. Ce dispositif comprend trois éléments, disques ou tambours, autour desquels sont enroulés des fils, réunis par une extrémité à un crayon. Des moyens de traction assurent une tension constante sur les fils de telle sorte que le signal de sortie du convertisseur soit représentatif du déplacement du fil par rapport à ces moyens de traction. La mesure de longueur des fils s'effectue donc de façon continue par potentiomètre. Toutefois, le même document envisage également que la même mesure de variation de longueur des fils puisse s'effectuer par valeurs discrètes, au niveau de disques ou tambours, ceux-ci étant codés par des zones opaques et transparentes.

On connaît par ailleurs du brevet FR-1 389 056 des indicateurs de déplacements angulaires comportant une roue dentée en rotation devant des détecteurs sensibles à la lumière. Du brevet FR-2 410 251, on connaît enfin des mètres à rubans comportant des repères optiques qui se déplacent devant une série de capteurs optoélectroniques, on n'a jamais envisagé à ce jour de les exploiter dans des dispositifs traceurs du genre de celui de l'invention.

Dans le but d'apporter une nouvelle solution au problème du relevé de coordonnées d'un point ou d'un ensemble de points, plus particulièrement de permettre d'obtenir les coordonnées numériques d'un point ou d'un ensemble de points, et de réaliser leur saisie, en vue de la mise en ordinateur, par des moyens à la fois simples, peu encombrants, précis et rapides, la présente invention a pour objet un dispositif pour obtenir les coordonnées numériques d'un point ou d'un ensemble de points, comportant un stylet pour se situer sur ledit point ou faire parcourir l'ensemble de points, deux bandes tendues dont une première extrémité commune est reliée audit stylet et dont les autres extrémités proviennent distinctement d'une réserve de bandes, des moyens de mesure pour mesurer la variation de longueur desdites bandes par valeurs discrètes et des moyens pour calculer les coordonnées desdits points à partir desdites variations de longueur, caractérisé en ce que lesdites bandes sont constituées par des films transparents comportant des raies transversales parallèles opaques régulièrement espacées et en ce que lesdits moyens de mesure comportent deux têtes de mesure optique, respectivement associées à chacun des deux films, chacune desdites têtes étant montées rotatives sur un support commun et comportant des moyens de guidage d'une extrémité du film voisine de la réserve de bandes pour faire passer le film entre des moyens photo-émetteurs et photorecepteurs coopérants, propres à détecter lesdites lignes du film.

Au sens de la présente description, on entend par le vocable "bande" un élément de configuration générale longitudinale, d'épaisseur faible ou négligeable et possédant une certaine souplesse. Plus particulièrement, sont considérés comme bandes, au sens de la présente description, des films ou des fils. Dans tous les cas, les bandes sont entourées autour de poulies qui forment ainsi une réserve de bandes. Ainsi, une bande peut être constituée par un film comportant des raies alternativement opaques et transparentes, transversales et parallèles, régulièrement espacées. Au cours du déplacement du film, c'est-à-dire des déplacements du stylet, lesdites raies du film défilent devant une tête de lecture.

Les raies opaques et transparentes peuvent être réalisées par des techniques connues en soi, sur lesquelles il n'est pas besoin de s'étendre puisqu'elles sont à la portée de l'homme de l'art. A titre d'illustration, on pourra néanmoins citer le dépôt de revêtement opaque sur film transparent, ou l'impression par revêtement photosensible, ces exemples n'étant bien entendu donnés qu'à titre d'illustration et n'ayant pas pour but de limiter l'invention.

La tête de lecture détermine par valeurs discrètes les déplacements de la bande associée à l'aide de deux photo-émetteurs et de deux photorécepteurs, disposés de part et d'autre de la bande.

Que les bandes soient constituées par des films, des fils ou tout autre élément de type longitudinal, on relie de préférence les moyens permettant de déterminer la valeur et le sens des déplacements desdites bandes, à un ordinateur qui comprend des moyens pour corriger la longueur effective de ces bandes en fonction du nombre de tours de celles-ci autour de leur poulie respective et en fonction de la longueur de leur trajet autour de leur borne ou plot de guidage et les poulies, ainsi que des moyens pour tenir compte de la dilatation due aux variations de température et du degré d'hygrométrie. En fait, lorsque la bande est constituée par un film, seules les variations de températures et de degré d'hygrométrie ont à être corrigées. Les moyens de mesure par valeurs discrètes des variations de longueur des bandes étant avantageusement reliés à un ordinateur, celui-ci comprend alors de préférence des moyens pour corriger les variations de température et de degré d'hygrométrie.

Dans la présente description et dans les revendications, l'expression photoémetteur est considérée comme équivalente de source de lumière ou de diode électroluminescente; elle englobe également tous les moyens équivalents qui émettent une radiation et qui peuvent être associés à des photorécepteurs ou à des phototransistors qui détectent des variations d'intensité des radiations émisent par les photoémetteurs et les transforment en un signal par exemple électrique qui peut être exploité et interprété.

Pour une meilleure compréhension, l'invention sera maintenant illustrée en référence aux dessins annexés à la présente description sur lesquels:

- la figure 1 est une vue de dessus schématique d'un mode de réalisation particulier du dispositif selon l'invention dans lequel les bandes sont constituées par des films;
- la figure 2 est une vue en détail d'une tête de lecture représentée sur la figure 1;
- la figure 3 est une vue schématique du fonctionnement de la tête de lecture avec interposition de la fenêtre;

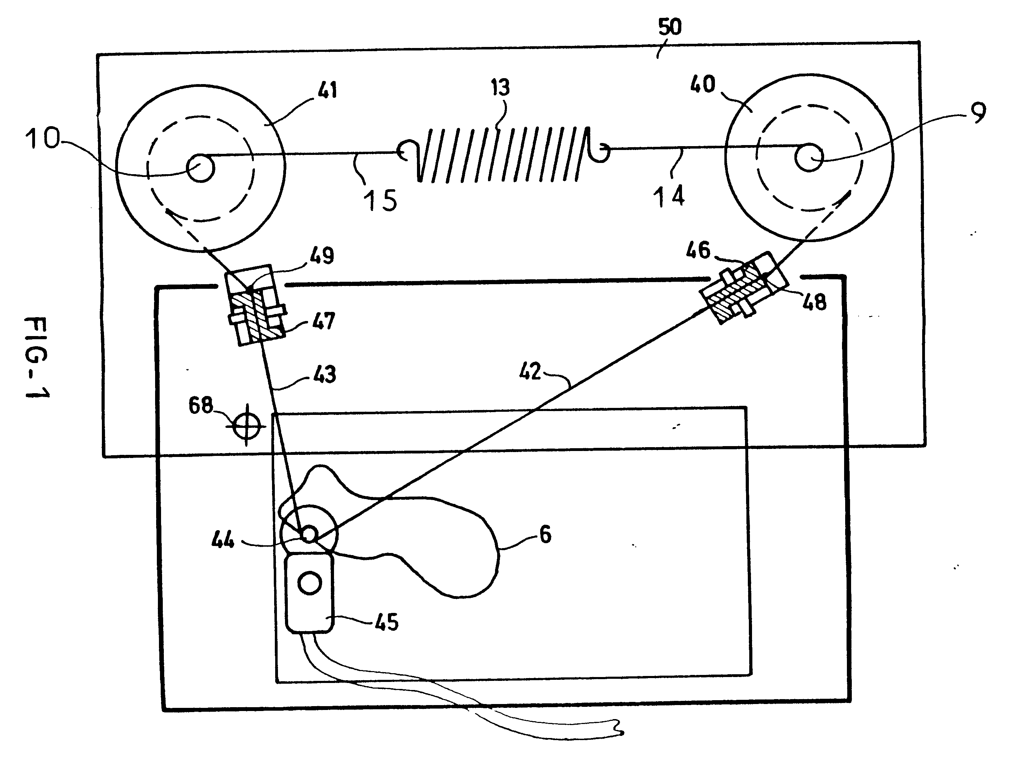

Le dispositif représenté sur la figure 1 comprend deux fils 42, 43 dont une extrémité commune 44, est reliée à un stylet 45 que l'on peut déplacer le long d'une figure 6.

Ces deux fils sont reliés sous tension à des moyens qui permettent de déterminer la longueur et la variation de longueur des fils 42 et 43 lors du déplacement du stylet 45 sur la figure 6.

Ces moyens comprennent deux poulies 40, 41 tournant respectivement autour d'un axe 9, 10 et autour desquelles sont entourés les fils 42, 43.

La mise sous tension des fils 42, 43 est assurée par l'intermédiaire d'un ressort hélicoïdal 13 qui est relié aux axes 9, 10, par l'intermédiaire de deux fils 14, 15.

La valeur de cette tension sera déterminée par l'homme de l'art en tenant compte de la résistance du fil et de sa limite d'inextensibilité, dans la mesure où pour obtenir une précision satisfaisante il est bien entendu souhaitable d'utiliser des fils inextensibles ou quasi inextensibles.

On peut préciser que, dans le cadre de la présente invention, les fils en KEVLAR (marque déposée) soumis à une tension de 50 g ont été considérés comme appropriés et fournissant une précision satisfaisante.

On n'a pas représenté sur la figure les moyens permettant de fixer les deux fils 42, 43 au niveau de leurs extrémités 44 au stylet 45.

Tout moyen permettant de maintenir à la fois solidement et précisément les deux fils autour de l'extrémité du stylet pourra être choisi, étant bien entendu que la fixation devra être située au niveau ou à proximité immédiate de la mine dudit stylet, afin d'éviter des risques d'erreurs. Cette fixation devra également être amovible pour permettre le remplacement du stylet.

A titre indicatif, ce moyen pourra être constitué par une bague ou une aiguille fixée libre en rotation et permettant l'adaptation de la mine, ou plus généralement de l'extrémité du stylet choisi.

Ce stylet pourra être, comme indiqué précédemment, un stylo, une pointe sèche, un crayon, un palpeur permettant de faire du contrôle de cote. Dans certains cas le chemin parcouru, ou la vision du chemin parcouru importe peu, seuls les points de départ et d'arrivée étant utilisés. Un tel dispositif permet également le contrôle de courbures de face avant d'optique avec comme "viseur" un roulement à billes. Dans tous les cas le déplacement peut être fait par la main de l'homme ou être commandé par une machine. De façon plus générale, le stylet peut être constitué par un moyen permettant de suivre avec une précision acceptable, une courbe sans épaisseur ou d'épaisseur réduite, et autorisant également l'opérateur à vérifier quelle partie de la courbe il a déjà suivie. Comme on l'a indiqué, le stylet peut également être déplacé par une machine dont on désire contrôler le déplacement.

L'ensemble du dispositif ainsi conçu pourra être rassemblé dans une tablette ou une barrette de dimensions réduites, qui pourra aisément s'adapter sur toute table à dessin ou dispositif pré-existant. Ceci constitue un des avantages de l'invention par rapport aux moyens décrits antérieurement, lesquels impliquent généralement l'usage d'un support particulier pour le graphique dont on désire saisir les coordonnées.

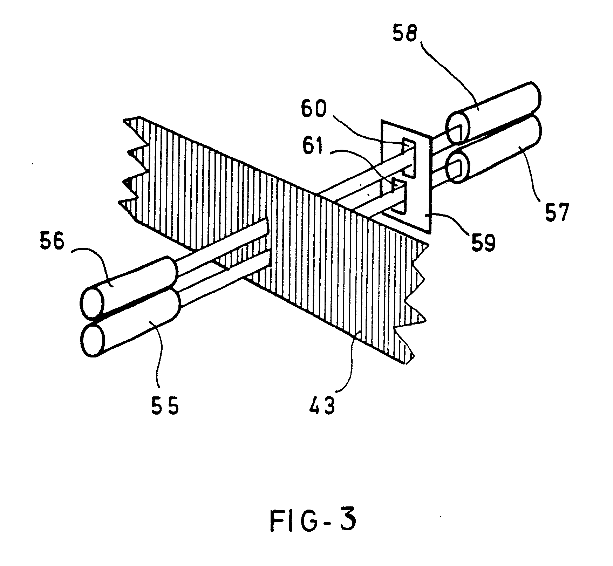

Sur les figures 1 à 3, on a décrit un mode préféré de réalisation de l'invention dans lequel les bandes dont on mesure les variations de longueur sont constituées par des films.

Les deux films 42 et 43 dont on mesure les variations de longueur, ont une extrémité commune qui correspond au moyen de visé 44 du stylet 45.

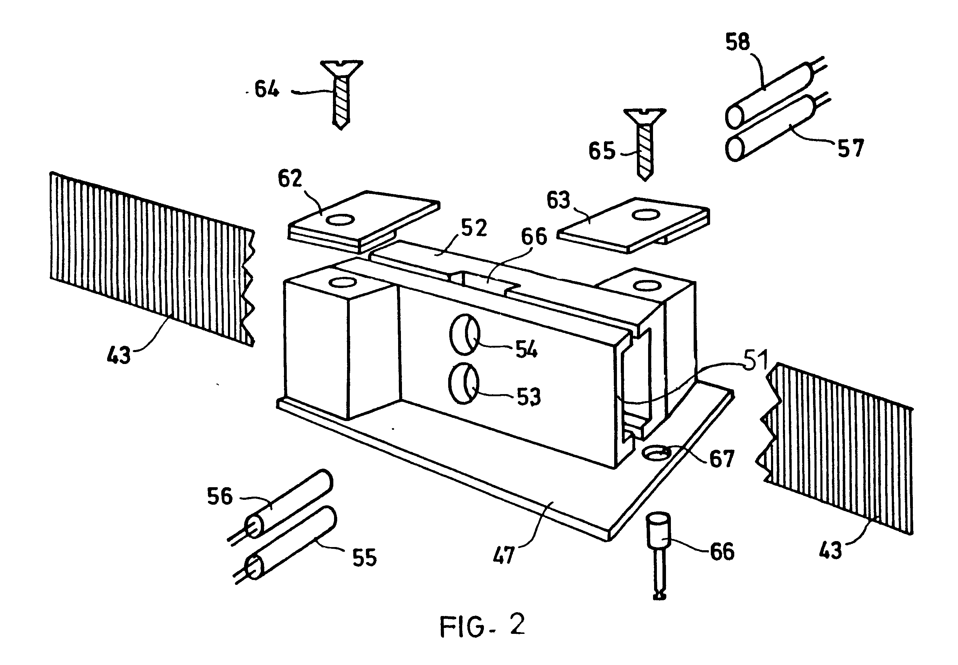

Au cours de leur déplacement, les deux films passent dans deux têtes de lecture 46, 47 qui sont représentées en détail sur la figure 2. Ces têtes de lecture sont montées à rotation autour de deux pivots 48, 49. L'ensemble ainsi formé est fixé sur une tablette 50.

Sur la figure 2 on a représenté une vue schématique en perspective de la tête de lecture 47 (la tête de lecture 46 étant identique).

Dans ces têtes de lecture que l'on décrira ultérieurement passe le film 43 qui peut être constitué en fait par un microfilm, par exemple de 8 mm de haut qui comprend une succession de raies transversales perpendiculaires formées de raies opaques, par exemple noires, de 75 µm de large et de raies transparentes de 125 µm.

La tête de lecture elle-même est formée de deux joues 51 et 52 qui ont pour but de guider le film sans le bloquer, un espace étant prévu entre lesdites joues. La grandeur de cet espace varie bien entendu en fonction de l'épaisseur du film. Dans le cas de l'invention, une épaisseur de l'ordre de 150 µm a été trouvée satisfaisante pour un film ayant environ 100 µm d'épaisseur. Ces joues ont également pour but d'éviter l'usure de la partie centrale du film qui sera lue dans les conditions évoquées ci-après.

Les joues 51 et 52 sont fixées sur un support solidaire de la tablette 50 ou directement sur celle-ci par tout moyen approprié collage, vissage ou autres.

Au milieu de chacune de ces joues se trouvent deux trous percés à savoir 53, 54 pour ce qui concerne la joue 51, les deux trous correspondant qui sont situés en regard et qui sont dans la joue 52 n'étant pas vus sur la figure.

Dans ces trous on place, pour ce qui concerne la joue 51, deux photoémetteurs 55, 56, par exemple des photoémetteurs infrarouge. Dans les deux trous situés en regard dans la joue 52 sont fixés des photorécepteurs 57, 58.

En règle générale, les lentilles qui existent sur les photorécepteurs 57, 58, ne permettent pas de lire le passage d'une raie noire de 75 µm.

Pour obtenir ce résultat on a donc interposé entre les photorécepteurs 57, 58 et le film 43, une fenêtre 59 qui a été réalisée dans le cadre de l'invention, sur un microfilm. Cette fenêtre comporte deux fentes ou ouvertures parallèles 60, 61, également parallèles aux raies du film et dont la hauteur est légèrement inférieure à la demihauteur dudit film 43. Ces deux fenêtres 60, 61 sont l'une au dessus de l'autre mais légèrement décalées dans le sens du déplacement du film de telle sorte que les photorécepteurs sont alternativement insolés et dans l'obscurité au cours du déplacement du film 43.

Dans le cas de la figure, et pour les valeurs d'épaisseur des raies du film qui ont été données précédemment, les ouvertures ou fentes 60, 61 avaient une largeur de 75 µm.

Dans un mode de réalisation de l'invention, pour réaliser la codification du système, le décalage introduit par la fenêtre et plus particulièrement par les deux ouvertures qui ne sont pas l'une au-dessus de l'autre, est de 1/4 de période entre les deux phototransistors. La lecture produit donc 4 codes différents pour un déplacement de 0,2 mm ce qui correspond donc à un pouvoir de résolution de 50 µm.

Le guidage fin du film dans les têtes et entre les deux joues s'effectue essentiellement à l'aide de deux cales 62, 63, de façon classique, ces cales pouvant être adaptées sur chacune des joues 51, 52 par tous moyens appropriés notamment par des vis 64, 65.

Une des joues 52 comporte par exemple en sa partie médiane, une partie en retrait 66, disposée au niveau des trous 53, 54 et dans laquelle pourra être insérée la fenetre 59.

On remarquera que le guidage du film s'effectue dans des conditions telles que seules les parties supérieures et inférieures de celui-ci peuvent subir des frottements et donc une usure, la partie médiane est d'une hauteur par exemple de l'ordre de 6 mm pour un film de 8 mm et reste donc libre.

On notera également sur la figure 2 que la tête de lecture 47 est montée sur son support par l'intermédiaire d'un pivot 66 pénétrant dans un orifice 67 de la tête de lecture. Ce pivot, qui porte la référence 49 sur la figure 1 permet à la tête de lecture de tourner autour de l'axe ainsi formé lors des déplacements du stylet 45.

En se référant à la figure 1, on notera que les films 43 et 42 qui passent dans la tête de lecture librement viennent s'enrouler sur les bobines ou poulies 41 et 40 respectivement, ces poulies étant placées à un angle de 135 degrés, pour ce qui concerne la poulie 41 avec la droite passant par les axes des deux têtes de lecture et à un angle de 45 degrés pour ce qui concerne la bobine ou poulie 40, les angles étant comptés dans le sens trigonométrique.

Le film peut être attaché au stylet par tout moyen approprié et notamment avec des boucles de fil en Kevlar.

On notera qu'il est concevable de réaliser le dispositif de l'invention avec un film unique fixé au voisinage de sa partie médiane sur le stylet au point 44.

Dans le cadre d'une réalisation particulière non revendication de l'invention, il a été trouvé que la tête de lecture devait avoir une longueur de l'ordre de 40 mm de telle sorte qu'avec le film utilisé qui avait les caractéristiques précédemment décrites, on obtenait un jeu longitudinal de l'ordre de 0,1 mm sans créer un angle trop important entre les raies du film et les fentes ou ouvertures de la fenêtre.

En outre il a également été trouvé que les joues 51 et 52 constituant la tête de lecture devaient être arrondies du côté de la sortie du film pour éviter l'usure prématurée de celui-ci.

On aura également noté que la largeur des franges noires (opaques) et transparentes du film, était différente, ce choix étant lié au problème de diffraction de la lumière à la limite d'une frange et à la sensibilité des photorécepteurs, plus particulièrement des phototransistors, afin d'obtenir électroniquement un rapport identique entre les deux cas.

Le choix du support pour le film pourra être effectué par l'homme de l'art en fonction des performances qu'il souhaite obtenir pour le dispositif selon l'invention. Il a été trouvé qu'un film en ESTAR (marque déposée de la société Kodak-Pathé) permettait d'obtenir de faibles variations de longueur du fait des modifications de température, d'hygrométrie ou de traction. De façon générale, tout film à haute définition, ou haut pouvoir contrastant, est approprié; il en est ainsi des films utilisés à titre de marques de micro-films qui ne présentent pas de dégradés ou franges.

Il est indispensable de calibrer l'appareil lors de sa mise sous tension afin de mettre les compteurs à une valeur bien précise. Ce calibrage peut se faire en visant un point bien précis qui a été représenté par la référence 68 sur la figure 1.

Bien entendu, les photorécepteurs sont reliés à un dispositif électronique prenant en charge de tester le changement d'état des cellules, de décoder le sens du déplacement en fonction de l'état précédent des cellules, de commander l'addition ou la soustraction de tous les compteurs contenant la distance du film et d'avoir sur le bus de sortie un état stable et cohérent des compteurs. Ces compteurs s'incrémentent et se décrémentent en permanence indépendamment du traitement informatique. En fait, le traitement informatique consiste à calculer les coordonnées d'un point en utilisant les longueurs des rayons des cercles fournies par l'électronique. Ces coordonnées cartésiennes sont obtenues par la recherche de l'intersection de deux cercles connaissant la distance entre les deux centres et leur rayon. Cela se résume à l'extraction d'une racine carrée et au calcul d'une division.

Il va de soi que les cercles ont respectivement pour centre les deux axes ou pivots 48 et 49, leur rayon respectif étant égal à la distance entre le stylet et ledit centre.

Pour la mise en oeuvre du dispositif, un minimum de trois moyens est nécessaire afin de:
- mettre les compteurs à une valeur initiale après avoir placé le stylet sur le point calibre 68. C'est de la précision de cette visée que dépend l'exactitude des distances calculées ultérieurement. A partir de ce moment les compteurs s'incrémentent ou se décrémentent indépendamment du traitement informatique;
- d'indiquer au traitement informatique de stocker des coordonnées d'un point qui devient origine des axes des coordonnées cartésiennes;
- prendre en compte la mesure et d'effectuer le calcul.

Le paramétrage du programme de base permet de transmettre le résultat du calcul selon deux modes:
. saisie par point il est renvoyé au programme de calcul d'une coordonnée cartésienne qui correspond au calcul effectué. Tant que ce calcul n'est pas terminé ou déclenché à nouveau, il n'y aura pas transmission d'autres calculs.
. saisie de courbes dans ce cas, une première validation permet de transmettre en continu tous les calculs des points. Si le stylet ne bouge pas on a alors n coordonnées identiques. Pour pallier cet état il a été prévu dans le programme de base de la tablette un paramètre définissant le grain minimum pour lequel les coordonnées ne sont pas transmises, évitant ainsi la duplication d'une même coordonnée dans ce type de saisie.

Pour gagner du temps, le logiciel de base du dispositif prévoit de ranger directement les données dans un tableau indiqué par l'utilisateur.

Le logiciel de base doit être écrit en langage machine et sa vitesse d'exécution dépend de la rapidité du processeur.

Pour le traitement du programme de base de la table, on pourra avoir recours à:
- la mémoire et le processeur de l'ordinateur hôte, ceci nécessitant de développer une carte interface entre le bus table et le bus hôte;
- l'intégration dans l'électronique du dispositif d'un processeur indépendant avec mémoire vive et mémoire morte, contenant les programmes de base du dispositif. Il est nécessaire d'avoir un bus standard pour communiquer avec tout ordinateur utilisateur.

A titre d'indication, il pourra être précisé que dans un mode de réalisation non revendiqué de l'invention on utilisait 256 octets de mémoire vive et 4 096 kilo-octets de mémoire morte.

Lorsqu'on utilise un dispositif de plus grande surface, il est préférable de rajouter à l'électronique un moyen de mesurer les variations de température ambiante quand les modifications sont prises en compte pour le traitement informatique pour corriger la dilatation du film et celle du support des axes de tête de lecture.

**Revendications**

1. Dispositif pour obtenir les coordonnées numériques d'un point ou d'un ensemble de points, comportant un stylet (45) pour se situer sur ledit point ou faire parcourir l'ensemble de points (6), deux bandes tendues (42, 43) dont une première extrémité (44) commune est reliée audit stylet (45) et dont les autres extrémités proviennent distinctement d'une réserve de bandes (40, 41), des moyens de mesure pour mesurer la variation de longueur desdites bandes par valeurs discrètes et des moyens pour calculer les coordonnées desdits points à partir desdites variations de longueur, caractérisé en ce que lesdites bandes sont constituées par des films transparents (42, 43) comportant des raies transversales parallèles opaques régulièrement espacées et en ce que lesdits moyens de mesure comportent deux têtes de mesure optique (46, 47), respectivement associées à chacun des deux films, chacune desdites têtes étant montées rotatives sur un support commun (50) et comportant des moyens de guidage (51, 52) d'une extrémité du film voisine de la réserve de bandes pour fair le film entre des moyens photo-émetteurs (55, 56) et des moyens photorécepteurs (57, 58) coopérants, propres à détecter lesdites raies du film.

2. Dispositif selon la revendication 1, caractérisé en ce que lesdits moyens de guidage (51, 52) sont en frottement avec le film par leurs parties supérieure et inférieure et en ce qu'elles présentent une partie médiane en retrait évitant l'usure de la partie centrale du film portant lesdites raies.

3. Dispositif selon la revendication précédente, caractérisé en ce que ladite réserve de bandes comporte deux poulies (40, 41) sur chacune desquelles la bande correspondante (42, 43) s'enroule en tours successifs se superposant, et un ressort (13) agissant sur les poulies (42, 43) pour appliquer une tension à la bande.

4. Dispositif selon l'une quelconque des revendications précédentes, caractérisé en ce qu'il comporte en outre une fenêtre (59) s'interposant entre les moyens photoémetteurs (55, 56) et les moyens photorécepteurs (57, 58) contre le film (42, 43) dans ladite tête de mesure (46, 47), ladite fenêtre (59) comportant deux ouvertures (60, 61) parallèles aux raies du film, propres à coopérer respectivement avec deux photoémetteurs différents et deux photorécepteurs différents coopérants, les ouvertures étant placées l'une au-dessus de l'autre dans le sens des raies mais légèrement décalées l'une par rapport à l'autre, dans le sens de déplacement du film, d'une fraction de deux raies successives du film.

5. Dispositif selon la revendication précédente, caractérisé en ce que lesdites ouvertures (60, 61) ont une largeur égale à la largeur de chacune desdites raies et en ce qu'elles sont déplacées l'une par rapport à l'autre latéralement d'un quart de période de sorte que les photorécepteurs sont exposés alternativement à la lumière et à l'obscurité et qu'un signal de type sinusoïdale est produit.

**Patentansprüche**

1. Vorrichtung zur Gewinnung von numerischen Koordinaten eines Punktes oder einer Punktfolge, umfassend eine Sonde (45), die über dem einen Punkt positionierbar oder an der Punktfolge (6) entlangführbar ist, zwei gespannte Bänder (42, 43), deren eines Ende (44) gemeinsam an der Sonde befestigt ist und deren anderes Ende jeweils für sich aus einem Bandvorrat kommt, Meßeinrichtungen zum Messen der Längenänderungen der Bänder in diskreten Zahlenwerten und Recheneinrichtungen zum Berechnen der Koordinaten der besagten Punkte aus den Längenänderungen,
dadurch gekennzeichnet,
daß die Bänder (42, 43) aus transparenten Filmstreifen bestehen, die Parallele, regelmäßig beabstandete undurchsichtige Querstreifen aufweisen und daß die Meßeinrichtungen zwei optische Meßköpfe (46, 47) umfassen, wobei jedem der beiden Filmstreifen je ein Meßkopf zugeordnet ist und wobei die beiden Meßköpfe verschwenkbar auf einer gemeinsamen Unterlage (50) angebracht sind und Führungskörper (51, 52) aufweisen, welche dazu dienen, jeweils das Filmende in der Nachbarschaft des Bandvorrates zu führen und den Film zwischen zusammenwirkenden, eine Erkennung der Querstreifen des Films ermöglichenden Lichtquellen (55, 56) und Lichtempfängern (57, 58) durchlaufen zu lassen.

2. Vorrichtung nach Anspruch 1, dadurch gekennzeichnet, daß die Führungskörper (51, 52) sich in ihrem oberen und unteren Bereich in Reibungskontakt mit dem Film befinden und zur Vermeidung einer Abnutzung des mittleren, die Querstreifen tragenden Teils des Films einen zurückspringenden mittleren Teil aufweisen.

3. Vorrichtung nach dem vorhergehenden Anspruch, dadurch gekennzeichnet, daß der Bandvorrat zwei Rollen (40, 41), auf die jeweils das zugehörige Band (42, 43) in aufeinanderfolgenden, einander überlagernden Windungen aufgewickelt bzw. aufwickelbar ist sowie eine Feder (13), die zur Erzeugung einer Bandspannung auf die Rollen (42, 43) wirkt, umfaßt.

4. Vorrichtung nach einem der vorhergehenden Ansprüche, dadurch gekennzeichnet, daß sie außerdem jeweils im Meßkopf (46, 47) ein Fenster (59) aufweist, daß zwischen den Lichtquellen (55, 56) und den Lichtempfängern (57, 58) dicht neben dem Film (42, 43) angeordnet ist, wobei das Fenster zwei zu den Querstreifen des Films parallele Öffnungen (60, 61) aufweist, die mit je zwei verschiedenen zusammenwirkenden Lichtquellen und Lichtempfängern zusammenarbeiten, wobei die Offnungen in Richtung der Querstreifen übereinander, jedoch in Laufrichtung des Films gesehen um einen Bruchteil der Breite zweier aufeinanderfolgender Querstreifen gegeneinander versetzt angeordnet sind.

5. Vorrichtung nach dem vorhergehenden Anspruch, dadurch gekennzeichnet, daß die Öffnungen (60, 61) eine mit der Größe jedes der Querstreifen übereinstimmende Größe aufweisen und daß sie seitlich um ein Viertel ihrer Breite gegeneinander versetzt sind, derart, daß die Lichtempfänger abwechselnd dem Licht und der Dunkelheit ausgesetzt sind und ein sinusförmiges Ausgangssignal erzeugt wird.

## Claims

1. A device for obtaining the numerical coordinates of a point or set of points, which includes a probe (45) for locating on the said point or being made to traverse the set of points (6), two taut tapes (42, 43) of which a first common end is connected to the said probe (45) and the other ends proceed distinctly from a tape reserve (40, 41), means of measurement for measuring the variation in length of the said tapes by discrete values and means of calculating the coordinates of the said points from the said variations in length, characterized in that the said tapes consist of transparent films (42, 43) having transverse parallel regularly spaced opaque bands and in that the said means of measurement include two optical measuring heads (46, 47) associated respectively with each of the two films, each of the said heads being mounted to rotate on a common support (50) and having means (51, 52) of guiding one end of the film adjacent to the tape reserve in order to make the film pass between photoemitter means (55, 56) and cooperating photoreceiver means (57, 58) suitable for detecting the said bands on the film.

2. A device as in Claim 1, characterized in that the said guide means (51, 52) are in frictional contact with the film by their upper and lower portions and in that they exhibit a recessed central portion to avoid wear of the central portion of the film bearing the said bands.

3. A device as in the preceding Claim, characterized in that the said tape reserve includes two pulleys (40, 41) upon each of which the corresponding tape (42, 43) is wound in succssive superimposed turns, and a spring (13) acting upon the pulleys (42, 43) for applying a tension to the tape.

4. A device as in any one of the preceding Claims, characterized in that it includes in addition a window (59) interposed between the photoemitter means (55, 56) and the photoreceiver means (57, 58) against the film (42, 43) in the said measuring head (46, 47), the said window (59) including two openings (60, 61) which are parallel with the bands on the film and suitable for cooperating respectively with two different photoemitters and two different cooperating photoreceivers, the openings being placed one above the other in the direction of the bands but slightly offset with respect to one another in the direction of movement of the film by a fraction of two successive bands on the film.

5. A device as in the preceding Claim, characterized in that the said openings (60, 61) have a width equal to the width of each of the said bands and in that they are displaced with respect to one another sideways by a quarter of a period so that the photoreceivers are exposed alternately to light and darkness and that a signal of sinusoidal type is produced.

FIG - 1

FIG. 2

FIG-3